# EUROPÄISCHE PATENTSCHRIFT

(11) **EP 3 162 644 B1**
(45) Veröffentlichungstag und Bekanntmachung des Hinweises auf die Patenterteilung: **02.10.2019**
(21) Anmeldenummer: 16196283.2
(22) Anmeldetag: 28.10.2016
(51) Int. Cl.: B60S 1/32, B60S 1/34

(54) **SCHEIBENWISCHVORRICHTUNG UND FAHRZEUG MIT EINER DERARTIGEN SCHEIBENWISCHVORRICHTUNG**
WINDSCREEN WIPER DEVICE, AND VEHICLE FITTED WITH SUCH A WINDSCREEN WIPER DEVICE
DISPOSITIF D'ESSUIE-GLACES ET VÉHICULE COMPRENANT UN TEL DISPOSITIF D'ESSUIE-GLACES

(30) Priorität: 30.10.2015 DE 102015221254
(43) Veröffentlichungstag der Anmeldung: 03.05.2017
(73) Patentinhaber: Volkswagen AG, 38440 Wolfsburg (DE)
(72) Erfinder: Geyer, Christoph, 38547 Calberlah (DE); Schulz, Christian, 38704 Liebenburg (DE)
(74) Vertreter: Clarenbach, Carl-Philipp

(56) Entgegenhaltungen:
- DE-A1-102013 222 996
- DE-C2- 3 142 716
- US-A1- 2004 078 919

## Beschreibung

Die Erfindung betrifft eine Scheibenwischvorrichtung gemäß der Merkmalskombination des Patentanspruchs 1 der Erfindung. Gemäß Anspruch 10 der Erfindung betrifft dieselbe ferner ein Fahrzeug, insbesondere Kraftfahrzeug, mit zumindest einer derartigen Scheibenwischvorrichtung.

Die DE 2 319 062 A1 beschreibt einen Scheibenwischer in Fahrzeugen, insbesondere Kraftfahrzeugen, mit einem Wischerarm, der einstückig aus Kunststoff besteht. An seinem einen Ende weist der Wischerarm einen Gehäuseteil zur Anlenkung an einen Gelenkteil eines mit der Wischerwelle verdrehsicher verbindbaren Aufnahmeteiles und zur Aufnahme des Gelenkteiles auf. Darüber hinaus weist der Wischerarm eine einerseits am Gelenkteil und andererseits am Wischerarm einhängbare Feder zum Andrücken des Wischerarms an die zu wischende Scheibe auf. Die DE 31 42 716 C2 beschreibt eine Wischvorrichtung für Scheiben von Fahrzeugen mit einem aus einem elastischen Kunststoff gefertigten Wischerarm, welcher nach Art einer Blattfeder gegen die Scheibe vorgespannt ist. Der Wischerarm weist einen sich in dessen Längsrichtung erstreckenden Kunststoffkern aus insbesondere einem glasfaserverstärkten Kunststoff mit axialer Faserorientierung sowie einen Kunststoffmantel aus insbesondere einem kohlefaserverstärkten Kunststoff mit einer Faserorientierung unter ±45° auf. Dabei sollen die axial orientierten Fasern die bei der Biegung auftretenden Zug- und Druckspannungen aufnehmen, wogegen die unter ±45° zur Längsrichtung angeordneten Fasern die bei der Biegung und bei der Torsion auftretenden Schubspannungen aufnehmen sollen. Der Kunststoffmantel ist über seine gesamte Länge mit dem Kunststoffkern durch Adhäsion fest verbunden. Aus der EP 0 525 850 A1 ist ein gegen die Scheibe vorgespannter Wischerarm aus einem faserverstärkten Kunststoff bekannt, welcher durch ein langgestrecktes aerodynamisch effizientes Profil mit einem symmetrisch elliptischen Profilquerschnitt gebildet ist. Die US 2004/0078919 A1 beschreibt einen Wischerarm, welcher durch ein Faserverbundrohr gebildet ist. Innerhalb des Faserbundrohres ist ein Elastomerschlauch zur Führung von z. B. Waschflüssigkeit zum Wischerblatt angeordnet. Der Elastomerschlauch wird durch ein flexibles Füllmaterial, insbesondere durch einen Schaumkern unterstützt. Aus der US 2008/0216276 A1 ist ein Wischerarm bekannt, der durch einen zentralen Steg als Strukturelement des Wischerarms und eine denselben umgebende Außenhülse gebildet ist. Die Außenhülse ist aus einem sogenannten neutralen Material, vorliegend aus einem Kunststoff gebildet und erlaubt eine elastische Verformung in alle Richtungen. Der Mittelsteg besteht aus zwei Abschnitten, nämlich einer mehrschichtigen Platte, an welche sich ein stabförmiger Abschnitt anschließt. Aus der WO 2012/022591 A1 ist ein Wischerarm bekannt, der eine erste Aufnahme zur Befestigung des Wischerarms an einer Scheibenwischvorrichtung und eine zweite Aufnahme zur Befestigung des Wischerblatts aufweist. Zwischen den Aufnahmen sind ein an die erste Aufnahme angrenzender steifer Wischarmbereich und ein an die zweite Aufnahme angrenzender elastischer Wischarmbereich angeordnet. Sowohl der erste als auch der zweite Wischarmbereich weisen einen Einleger auf, der von einer Kunststoffumhüllung umgeben ist. Die Kunststoffumhüllungen weisen eine unterschiedliche Elastizität auf. Ebenso weisen die Einleger einen unterschiedlichen Kunststoff auf.

Aus der Offenlegungsschrift DE 10 2013 222 996 A1 ist eine Scheibenwischervorrichtung für ein Fahrzeug bekannt, die ein Wischblatt mit einem langgestreckten Oberteil und einem langgestreckten Unterteil, welche zumindest teilweise biegbar ausgestaltet sind, aufweist, wobei das Wischerblatt aus einem thermoplastischen Elastomer gefertigt sein kann.

Aufgabe der Erfindung ist es, eine Scheibenwischvorrichtung für ein Fahrzeug, insbesondere Kraftfahrzeug, mit einem im Hinblick auf den Stand der Technik alternativen, insbesondere einfach und kostengünstig herstellbaren Wischerarm zu schaffen, welcher überdies exakt an die jeweils zu verzeichnende Belastung während des bestimmungsgemäßen Gebrauchs desselben anpassbar ist. Des Weiteren ist es Aufgabe der Erfindung, ein Fahrzeug, insbesondere Kraftfahrzeug, mit zumindest einer derartigen Scheibenwischvorrichtung bereitzustellen.

Gelöst wird die gestellte Aufgabe durch eine Scheibenwischvorrichtung für ein Fahrzeug, insbesondere Kraftfahrzeug, mit einem bogenförmigen, flexiblen und orthogonal zur Scheibe des Fahrzeugs vorgespannt ausgebildeten Wischerarm, welcher durch ein langgestrecktes Kernelement und ein dasselbe umgebendes, hülsenartiges Mantelelement gebildet ist, wobei das Kernelement aus einem Elastomer und das Mantelelement aus einem faserverstärkten Kunststoff besteht.

Aufgrund der Tatsache, dass der Wischerarm lediglich aus zwei unterschiedlichen Komponenten besteht, ist dieser besonders einfach und kostengünstig herstellbar. Vermittels des Mantelelements aus faserverstärkten Kunststoff ist eine hinreichend konstante Federkraft orthogonal zur Scheibe, insbesondere Windschutzscheibe, einstellbar. In umfangreichen Versuchen zum Anmeldungsgegenstand wurde gefunden, dass sich der elastomere Kern besonders vorteilhaft auf die Elastifizierung des Faserverbundes des Mantelelements auswirkt, welches wiederum eine definierte Einstellung des elastischen Verhaltens des Wischerarms und/oder eine Feineinstellung der gegen die zu wischende Scheibe aufzubringenden Federkraft erlaubt. Je nach Wahl des Elastomermaterials und/oder der Materialstärke ist besagte Federkraft in weiten Grenzen einstellbar.

Die Unteransprüche beschreiben bevorzugte Weiterbildungen oder Ausgestaltungen der Erfindung.

Danach nimmt das besagte Kernelement den Hohlraum des hülsenartigen Mantelelements teilweise ein, wobei das Kernelement ebenfalls hülsenartig bzw. rohrförmig ausgebildet ist und sich an die Innenmantelfläche des Mantelelements anschmiegt. Weiter kann das besagte rohrförmige Kernelement über die Länge und/oder den Umfang desselben gesehen eine unterschiedliche Materialverteilung aufweisen, wodurch eine weitere Möglichkeit geschaffen, das elastische Verhalten des Wischerarms definiert einzustellen. Eine besonders einfache und funktionssichere Ausführungsform der Erfindung erzielt man dadurch, dass das Elastomer des Kernelements ein elastomerer Kunststoff oder ein Kautschuk, insbesondere ein synthetischer Kautschuk ist. Was den faserverstärkten Kunststoff des Mantelelements anbelangt, ist dieser bevorzugt ein glas- oder karbonfaserverstärkter Kunststoff, welcher den zu verzeichnenden dynamischen und Umweltbelastungen sehr gut gerecht wird. Bevorzugt beträgt dabei die Faserorientierung des faserverstärkten Kunststoffs ±45° zur Längserstreckung des Wischerarms, wodurch derselbe zwar Torsionssteif, jedoch bestimmungsgemäß in Grenzen biegeweich ist. Weiter bevorzugt weist der Wischerarm einen geschlossenen, aerodynamisch günstigen Profilquerschnitt, insbesondere gerundeten Profilquerschnitt auf, woraus eine sichere Funktion der Scheibenwischvorrichtung auch bei hohen Fahrgeschwindigkeiten des Fahrzeugs resultiert. Gemäß einer besonders praxisnahen Weiterbildung der Erfindung sind einenends des Wischerarms ein erster Adapter zur Anbindung des Wischerarms an einer Motorwelle eines Wischermotors und anderenends des Wischerarms ein zweiter Adapter zur Anbindung eines Wischerblattes an den Wischerarm vorgesehen. Bevorzugt sind der erste und zweite Adapter mit dem Wischerarm stoffschlüssig verbunden, insbesondere verklebt, woraus Materialeinsparungen und Einsparungen an Herstellungskosten resultieren. Bevorzugt ist der erste Adapter zur Anbindung des Wischerblattes durch einen Schnellwechsel-Adapter gebildet, woraus ein einfacher kostengünstiger Wechsel des Wischerblattes bei beispielsweise Verschleiß desselben ermöglicht ist.

Die Erfindung betrifft auch ein Fahrzeug insbesondere Kraftfahrzeug, mit zumindest einer Scheibenwischvorrichtung der vorbeschriebenen Art.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: eine perspektivische Aufsicht auf eine Front-Scheibe eines Fahrzeugs mit einer erfindungsgemäß ausgestalteten Scheibenwischvorrichtung,
- Fig. 2: eine perspektivische Einzelansicht eines erfindungswesentlichen Wischerarms der Scheibenwischvorrichtung nach Fig. 1,
- Fig. 3: die Einzelheit "Z" nach Fig. 2,
- Fig. 4: den Wischerarm im Querschnitt gemäß einer nicht beanspruchten Ausführungsvariante, und
- Fig. 5: den Wischerarm im Querschnitt gemäß vorteilhafter Ausführungsvarianten der Erfindung.

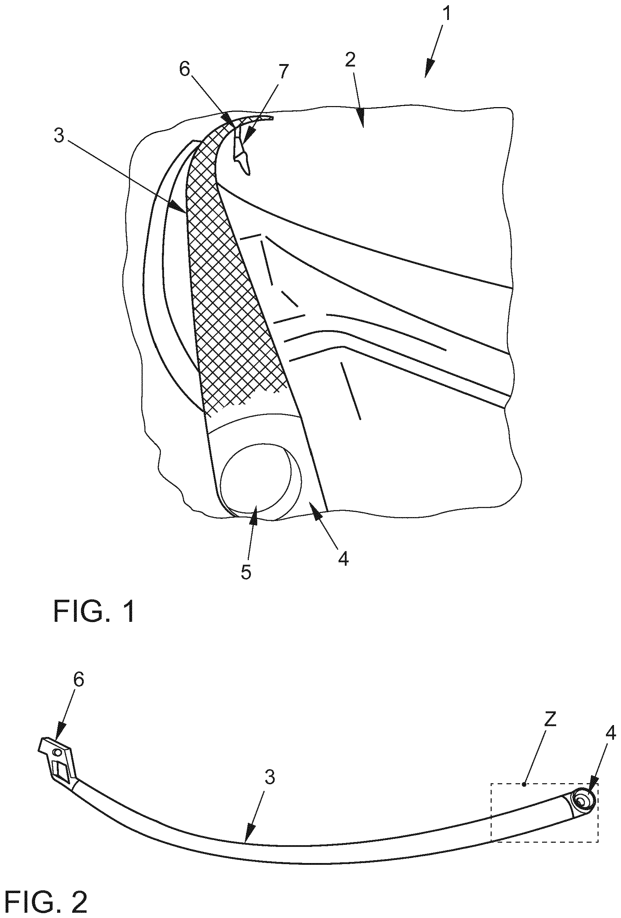

Fig. 1 zeigt ausschnittsweise ein Fahrzeug 1, vorliegend ein Kraftfahrzeug, mit einer Windschutz-Scheibe 2, welcher eine Scheibenwischvorrichtung zugeordnet ist. Die Scheibenwischvorrichtung umfasst zumindest einen Wischerarm 3, der einenends unter Vermittlung eines ersten Adapters 4 mit einer Motorwelle 5 eines nicht zeichnerisch dargestellten Wischermotors drehfest verbunden ist und anderenends unter Vermittlung eines zweiten Adapters 6 ein Wischerblatt 7 trägt. Der zweite Adapter 6 ist bevorzugt durch einen an sich bekannten Schnell-Wechsel-Adapter 6 gebildet. Schnell-Wechsel-Adapter 6 sind in den verschiedensten Ausführungsformen bekannt, und werden im Hinblick auf das betreffende Befestigungssystem beispielsweise als sogenannte "Top-Lock-Adapter", "Side-Lock-Adapter", o.a. bezeichnet. In Fig. 2 ist ein sogenannter "Top-Lock-Adapter" dargestellt.

Wie insbesondere aus den Fig. 1 und 2 ersichtlich, ist der Wischerarm 3 bogenförmig sowie flexibel ausgebildet und im verbauten Zustand orthogonal zur Scheibe 2 des Fahrzeugs 1 gegen dieselbe vorgespannt. Ein aus dem Stand der Technik bekanntes Gelenk sowie eine separate Feder zum Andrücken des Wischerblattes 7 unter Vermittlung des Wischerarms 3 an die Scheibe 2 ist vorliegend nicht vorgesehen.

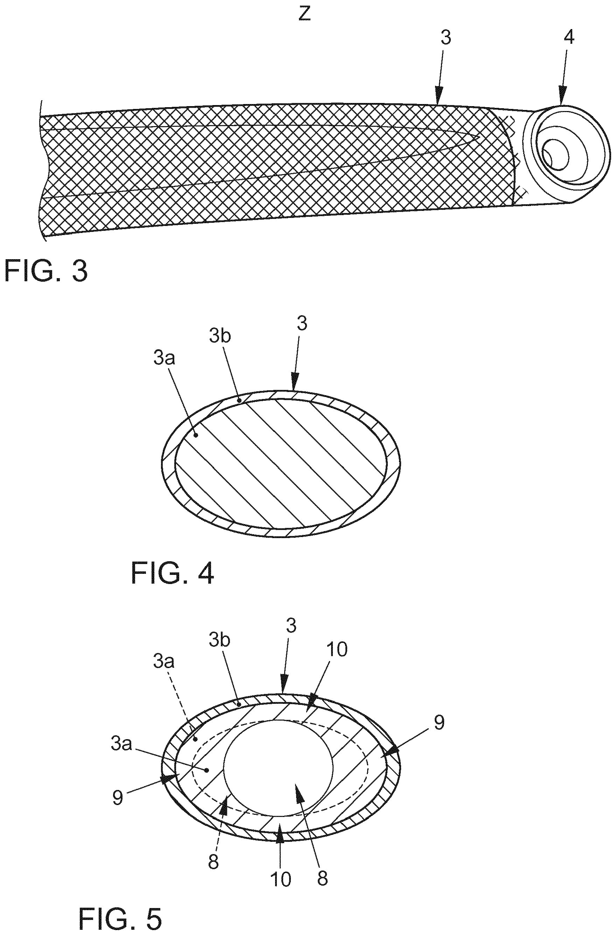

Der Wischerarm 3 ist insbesondere unter Bezugnahme auf Fig. 4 und 5 durch ein langgestrecktes Kernelement 3a und ein dasselbe umgebendes, hülsenartiges Mantelelement 3b gebildet. Das Kernelement 3a besteht dabei aus einem Elastomer, wie einem elastomeren Kunststoff oder einem Kautschuk, insbesondere einem synthetischen Kautschuk. Das hülsenartige Mantelelement 3b besteht demgegenüber aus einem glas- oder karbonfaserverstärkten Kunststoff. Zur Herstellung des Mantelelements 3b werden Glas- oder Kohlefasern bevorzugt in einem Winkel von ±45° zur Längserstreckung des Wischerarms 3 untereinander verwoben und in eine Kunststoffmatrix eingebettet. Eine derartige Faserorientierung ist in den Fig. 1 und 3 angedeutet. Die Herstellung des Mantelelements 3b erfolgt bevorzugt unter Zuhilfenahme eines Kerns, auf welchen die Glas- oder Kohlefasern während des Verwebens aufgebracht und nachfolgend mit Kunststoff der besagten Kunststoffmatrix umspritzt und getränkt werden.

Der Kern kann beispielsweise durch das in Fig. 4 dargestellte Kernelement 3a gebildet sein, welches den Hohlraum des hülsenartigen Mantelelements 3b vollständig einnimmt. Bevorzugt werden während des Umspritzens und Tränkens der verwobenen Glas- oder Kohlefasern mit Kunststoff der erste und zweite Adapter 4, 6 stoffschlüssig mit dem Wischerarm 3 verbunden, insbesondere verklebt, indem vorteilhaft die adhäsiven Eigenschaften der Kunststoffmatrix genutzt werden. Besagter Stoffschluss kann auch mit einem Formschluss kombiniert sein, indem der erste und zweite Adapter 4, 6 nicht zeichnerisch dargestellte Formschlusselemente, wie Fortsätze, aufweisen, die einen Formschluss mit den Glas- oder Kohlefasern und/oder dem ausgehärteten Kunststoff der Kunststoffmatrix eingehen.

Ein Kernelement 3a, welches erst nach Herstellung des Mantelelements 3b in dasselbe eingebracht wird, wird beispielsweise nach einem Kunststoff-Spritzgießverfahren in den Hohlraum des Mantelelements 3b eingespritzt. Die Erfindung erfasst ein Kernelement 3a, welches gemäß Fig. 5 den besagten Hohlraum lediglich teilweise einnimmt, indem dasselbe rohrförmig ausgebildet ist.

Wie den Zeichnungsfiguren weiter entnehmbar ist, weist der Wischerarm 3 einen geschlossenen, aerodynamisch günstigen Profilquerschnitt, vorliegend einen gerundeten Profilquerschnitt auf, wobei in den Fig. 4 und 5 lediglich beispielgebend ein elliptischer Profilquerschnitt gezeigt ist. Der Profilquerschnitt kann demgegenüber beispielsweise auch kreisrund oder tropfenförmig sein, welches demgemäß durch die Erfindung mit erfasst ist (nicht zeichnerisch dargestellt).

Das Kernelement 3a schmiegt sich an die Innenmantelfläche des elliptisch ausgebildeten Profils des Mantelelements 3b an und bildet gemäß Fig. 5 (durchgehende Linienführung) einen kreisrunden Hohlraum 8 aus, wodurch über den Querschnitt gesehen eine ungleichmäßige Materialverteilung mit örtlichen Materialanhäufungen 9 und örtlichen Materialausdünnungen 10 bezüglich des Kernelements 3a zu verzeichnen ist. Diese ungleichmäßige Materialverteilung kann derart gestaltet sein, dass eine optimale Einstellung des elastischen Verhaltens des Wischerarms 3 bewirkt ist. Mit der gestrichelten Linienführung in Fig. 5 ist demgegenüber ein rohrförmiges Kernelement 3a angedeutet, dessen Materialstärke überall gleich ist, wodurch besagte ungleichmäßige Materialverteilung im Inneren des Mantelelements 3b vermieden ist.

### Bezugszeichenliste

- 1: Fahrzeug
- 2: Scheibe
- 3: Wischerarm
- 3a: Kernelement
- 3b: Mantelelement
- 4: erster Adapter
- 5: Motorwelle
- 6: zweiter Adapter
- 7: Wischerblatt
- 8: Hohlraum (Kernelement 3a)
- 9: Materialanhäufung
- 10: Materialausdünnung

## Patentansprüche

1. Scheibenwischvorrichtung für ein Fahrzeug (1), insbesondere Kraftfahrzeug, mit einem bogenförmigen, flexiblen und orthogonal zur Scheibe (2) des Fahrzeugs (1) vorgespannt ausgebildeten Wischerarm (3), welcher durch ein langgestrecktes Kernelement (3a) und ein dasselbe umgebendes, hülsenartiges Mantelelement (3b) gebildet ist, wobei das Kernelement (3a) aus einem Elastomer und das Mantelelement (3b) aus einem faserverstärkten Kunststoff besteht, und wobei das Kernelement (3a) den Hohlraum des hülsenartigen Mantelelements (3b) teilweise einnimmt und rohrförmig ausgebildet ist, **dadurch gekennzeichnet, dass** sich das Kernelement (3a) an eine Innenmantelfläche des Mantelelements (3b) anschmiegt.

2. Scheibenwischvorrichtung nach Anspruch 1, **dadurch gekennzeichnet, dass** das Kernelement (3a) über die Länge und/oder den Umfang desselben gesehen eine unterschiedliche Materialverteilung aufweist.

3. Scheibenwischvorrichtung nach einem der Ansprüche 1 bis 2, **dadurch gekennzeichnet, dass** das Elastomer des Kernelements (3a) ein elastomerer Kunststoff oder ein Kautschuk ist.

4. Scheibenwischvorrichtung nach einem der Ansprüche 1 bis 3, **dadurch gekennzeichnet, dass** der faserverstärkte Kunststoff des Mantelelements (3b) ein glas- oder karbonfaserverstärkter Kunststoff ist.

5. Scheibenwischvorrichtung nach Anspruch 4, **dadurch gekennzeichnet, dass** die Faserorientierung des faserverstärkten Kunststoffs ±45° zur Längserstreckung des Wischerarms (3) beträgt.

6. Scheibenwischvorrichtung nach einem der Ansprüche 1 bis 5, **dadurch gekennzeichnet, dass** der Wischerarm (3) einen geschlossenen, aerodynamisch günstigen Profilquerschnitt aufweist.

7. Scheibenwischvorrichtung nach einem der Ansprüche 1 bis 6, **dadurch gekennzeichnet, dass** einenends des Wischerarms (3) ein erster Adapter (4) zur Anbindung des Wischerarms (3) an einer Motorwelle (5) eines Wischermotors und anderenends des Wischerarms (3) ein zweiter Adapter (6) zur Anbindung eines Wischerblattes (7) an den Wischerarm (3) vorgesehen sind.

8. Scheibenwischvorrichtung nach Anspruch 7, **dadurch gekennzeichnet, dass** der erste und zweite Adapter (4, 6) mit dem Wischerarm (3) stoffschlüssig verbunden, insbesondere verklebt sind.

9. Fahrzeug (1), insbesondere Kraftfahrzeug, mit zumindest einer Scheibenwischvorrichtung nach einem der Ansprüche 1 bis 8.

## Claims

1. Windscreen wiper device for a vehicle (1), in particular motor vehicle, with an arcuate, flexible wiper arm (3) which is formed in a manner prestressed orthogonally with respect to the windscreen (2) of the vehicle (1) and is formed by an elongate core element (3a) and a sleeve-like casing element (3b) surrounding the same, wherein the core element (3a) is composed of an elastomer and the casing element (3b) is composed of a fibre-reinforced plastic, and wherein the core element (3a) partially occupies the cavity of the sleeve-like casing element (3b) and is of tubular design, **characterized in that** the core element (3a) nestles against an inner casing surface of the casing element (3b).

2. Windscreen wiper device according to Claim 1, **characterized in that** the core element (3a) has a different distribution of material, as seen over the length and/or the circumference of same.

3. Windscreen wiper device according to either of Claims 1 and 2, **characterized in that** the elastomer of the core element (3a) is an elastomeric plastic or a rubber.

4. Windscreen wiper device according to any of Claims 1 to 3, **characterized in that** the fibre-reinforced plastic of the casing element (3b) is a glass- or carbon-fibre-reinforced plastic.

5. Windscreen wiper device according to Claim 4, **characterized in that** the fibre orientation of the fibre-reinforced plastic is ±45° with respect to the longitudinal extent of the wiper arm (3).

6. Windscreen wiper device according to any of Claims 1 to 5, **characterized in that** the wiper arm (3) has a closed, aerodynamically favourable profile cross section.

7. Windscreen wiper device according to any of Claims 1 to 6, **characterized in that** a first adapter (4) for connecting the wiper arm (3) to a motor shaft (5) of a wiper motor is provided at one end of the wiper arm (3) and a second adapter (6) for connecting a wiper blade (7) to the wiper arm (3) is provided at the other end of the wiper arm (3).

8. Windscreen wiper device according to Claim 7, **characterized in that** the first and second adapters (4, 6) are materially bonded, in particular adhesively bonded, to the wiper arm (3) .

9. Vehicle (1), in particular motor vehicle, with at least one windscreen wiper device according to any of Claims 1 to 8.

## Revendications

1. Dispositif d'essuie-glace pour un véhicule (1), en particulier un véhicule automobile, avec un bras d'essuie-glace (3) courbe, flexible et précontraint orthogonalement à la vitre (2) du véhicule (1), qui est formé par un élément de noyau allongé (3a) et un élément d'enveloppe de type douille (3b) entourant celui-ci, dans lequel l'élément de noyau (3a) se compose d'un élastomère et l'élément d'enveloppe (3b) se compose d'une matière plastique renforcée par des fibres, et dans lequel l'élément de noyau (3a) occupe partiellement l'espace creux de l'élément d'enveloppe de type douille (3b) et est de forme tubulaire, **caractérisé en ce que** l'élément de noyau (3a) épouse une surface latérale interne de l'élément d'enveloppe (3b) .

2. Dispositif d'essuie-glace selon la revendication 1, **caractérisé en ce que** l'élément de noyau (3a), considéré sur la longueur et/ou la périphérie de celui-ci, présente une distribution de matière différente.

3. Dispositif d'essuie-glace selon une des revendications 1 à 2, **caractérisé en ce que** l'élastomère de l'élément de noyau (3a) est une matière plastique élastomère ou un caoutchouc.

4. Dispositif d'essuie-glace selon l'une quelconque des revendications 1 à 3, **caractérisé en ce que** la matière plastique renforcée par des fibres de l'élément d'enveloppe (3b) est une matière plastique renforcée par des fibres de verre ou de carbone.

5. Dispositif d'essuie-glace selon la revendication 4, **caractérisé en ce que** l'orientation des fibres de la matière plastique renforcée par des fibres vaut ± 45° par rapport à l'extension longitudinale du bras d'essuie-glace (3).

6. Dispositif d'essuie-glace selon l'une quelconque des revendications 1 à 5, **caractérisé en ce que** le bras d'essuie-glace (3) présente une section transversale de profilé fermée, favorable au point de vue aérodynamique.

7. Dispositif d'essuie-glace selon l'une quelconque des revendications 1 à 6, **caractérisé en ce qu'**il est prévu à une extrémité du bras d'essuie-glace (3) un premier adaptateur (4) pour la liaison du bras d'essuie-glace (3) à un arbre de moteur (5) d'un moteur d'essuie-glace et à l'autre extrémité du bras d'essuie-glace (3) un second adaptateur (6) pour la liaison d'un balai d'essuie-glace (7) au bras d'essuie-glace (3).

8. Dispositif d'essuie-glace selon la revendication 7, **caractérisé en ce que** le premier et le second adaptateurs (4, 6) sont matériellement liés, en particulier collés, au bras d'essuie-glace (3).

9. Véhicule (1), en particulier véhicule automobile, doté d'au moins un dispositif d'essuie-glace selon l'une quelconque des revendications 1 à 8.
